# EUROPEAN PATENT APPLICATION

(11) **EP 0 543 335 A2**
(43) Date of publication of application: **26.05.1993**
(21) Application number: 92119623.4
(22) Date of filing: 17.11.1992
(51) Int. Cl.: A61C 13/24, A61C 13/235

(54) **A denture**

(30) Priority: 20.11.1991 JP 304710/91
(71) Applicant: Kanazawa, Yukio, Hamamatsu-shi, Shizuoka, 431-31 (JP); Omura, Haruo, Hamamatsu-shi, Shizuoka 431-31 (JP)
(72) Inventor: Kanazawa, Yukio, Hamamatsu-shi, Shizuoka, 431-31 (JP); Omura, Haruo, Hamamatsu-shi, Shizuoka 431-31 (JP)
(74) Representative: Schwan, Gerhard, Dipl.-Ing.

(57) **Abstract**

The present invention relates to a denture, and should be created to achieve an object to hold, for example, a full denture in an oral cavity without use of a denture adhesive keeping away from the dislocation against user's will.

The magnets (7,8) to which their same poles are opposite each other are embedded in a couple of an upper artificial teeth (5,6) and a lower artificial teeth (5',6') respectively. And the full denture is held in the oral cavity by means of the interaction of a magnetic repulsion by the magnets on attaching the full denture in the oral cavity.

## Description

### BACKGROUND OF THE INVENTION

### Field of the Invention

The present invention relates to a denture, or particular to a structure for holding the denture in an oral cavity.

### Description of the Prior Art

A partial denture and a full denture etc. are generally known as a prosthetic material which partially or completely replenishes a defective part of a natural teeth yanked out.

For instance, the full denture constitutes a couple of an upper denture base and a lower denture base on which appointed artificial teethes are planted respectively. Especially on the upper denture base, the upper denture base is held in an oral cavity by means of the conformity by cheek muscle and the utilization of the negative pressure between this denture and an upper hard palate in the oral cavity on attaching the upper denture base.

The aforesaid full denture has such convenience that it is attached or removed freely. On the other hand, it is so inconvenient that the upper denture base of the full denture can be dislocated against user's will.

There upon such an art that the upper denture base of the full denture is held in the oral cavity by means of the adhesive strength of a denture adhesive intervened between a back face of the upper denture base and the hard palate is recently proposed.

The structure for holding the full denture with the denture adhesive as mentioned above, however, has such a troublesomeness for use that the denture adhesive must be exchanged for new one in accordance with the lapse of period for use or in response to entrance of a foreign material such as a chewed food into between the denture base and the hard palate.

### SUMMARY OF THE INVENTION

The present invention has been created in consideration of the above-said circumstances. Therefore it is an object of the present invention to provide a denture having a structure by which the upper and lower denture bases can be held conveniently in the oral cavity without use of the denture adhesive so that they may not be dislocated against user's will.

In order to accomplish the object, the general means adopted as a point in the present invention is a denture which comprises a couple of an upper artificial teeth and a lower artificial teeth being characterized by that magnetic bodies to which their same poles are opposite each other are installed in the upper artificial teeth and the lower artificial teeth respectively so that the upper artificial teeth and the lower artificial teeth are held in an oral cavity by means of the interaction of a magnetic repulsion by the upper and lower magnetic bodies.

Accordingly the denture of the present invention can be held conveniently without use of the denture adhesive so that the denture is not dislocated against user's will. As a result, the convenience of handling on the corresponding denture should be so improved.

An embodiment of this invention will be described in detail with reference to the attached drawings. It should be clearly understood that the embodiment is shown only an example utilizing this invention and the technical scope of this invention is not limited by the embodiment in no way.

### BRIEF DESCRIPTION OF THE DRAWINGS

Fig. 1 is a side elevation view showing the structure of a denture according to an embodiment of the present invention;
Fig. 2 is a view taken in the direction of the arrows substantially along the line 10-10 of Fig. 1;
Fig. 3 is a view taken in the direction of the arrows substantially along the line 11-11 of Fig. 1.

### DETAILED DESCRIPTION OF THE PREFERRED EMBODIMENTS

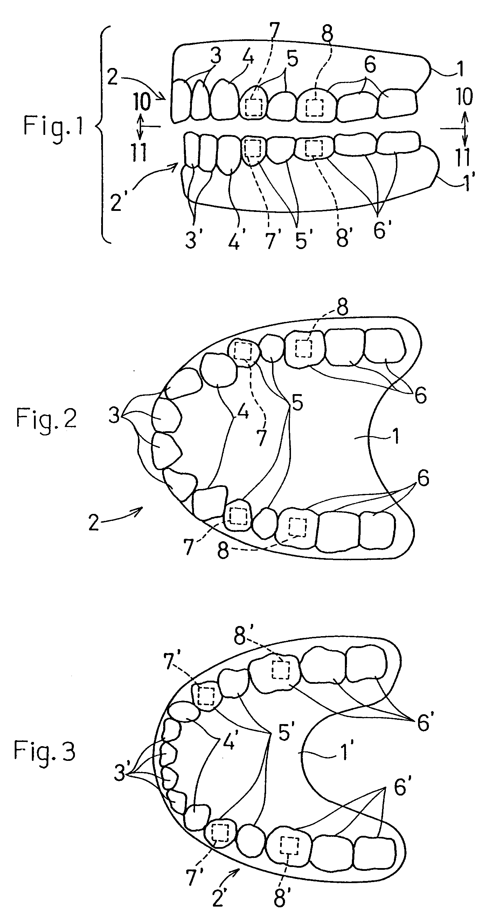

A full denture according to an embodiment of the present invention is shown in Fig. 1, Fig. 2 and Fig. 3. On the full denture, the appointed artificial teethes 2, 2 ' are planted severally on a couple of an upper denture base 1 and a lower denture base 1 ' which are composed of, for example, a resin.

As known well, the artificial teethes said above are composed of the imitations of incisors 3, 3 ', canines 4, 4', premolars 5, 5', molars 6, 6 ' and so on.

So a magnet 7, 8 is embedded respectively in a part of the premolar 5 and the molar 6 which compose the upper artificial teeth 2. a magnet 7', 8 ' is embedded respectively in a part of the premolar 5 ' and the molar 6' which compose the lower artificial teeth 2 '. In these arrangement, a pole of the magnets 7, 8 is opposite to same one of the magnets 7', 8 ' each other.

When the full denture constituted as mentioned above has been attached in the oral cavity (non-illustrated), the corresponding full denture is held in the oral cavity by means of the interaction of the magnetic repulsion by the magnets 7, 7 ' and the magnets 8, 8 '.

Therefore the full denture according to this embodiment can be held conveniently in the oral cavity without use of the denture adhesive so that the full denture may not be dislocated against user's will. Moreover, as it is not necessary for the denture adhesive to be used as said above, the foreign material can be excluded easily even if the foreign material should enter into between the denture base 1 and the hard palate (non-illustrated).

Furthermore it is needless to say that the quantity of the magnet embedded in the artificial teethes 2, 2' can be properly increased or decreased in proportion to the size or the weight etc. of the corresponding full denture.

And in this embodiment, the full denture was explained as an example. The Art as explained above, however, could be applied to the aforementioned partial denture.

While the embodiment of the present invention, as here in disclosed, constitutes a preferred form, it is to be understood that other forms might be adopted.

## Claims

1. A denture which comprises a couple of an upper artificial teeth and a lower artificial teeth being characterized by that magnetic bodies to which their same poles are opposite each other are installed in the upper artificial teeth and the lower artificial teeth respectively so that the upper artificial teeth and the lower artificial teeth are held in an oral cavity by means of the interaction of a magnetic repulsion by the upper and lower magnetic bodies.

2. A denture as defined in claim 1 wherein said magnetic bodies are embedded in the upper artificial teeth and the lower artificial teeth respectively.
